# EUROPEAN PATENT APPLICATION

(11) **EP 4 641 044 A1**
(43) Date of publication of application: **29.10.2025**
(21) Application number: 24171781.8
(22) Date of filing: 23.04.2024
(51) Int. Cl.: F16F 1/368

(54) **HYBRID LEAF SPRING FOR VEHICLES**

(30) Priority: 22.04.2024 IT 202400009166
(71) Applicant: MB ReD S.r.l., 10078 Venaria Reale (TO) (IT)
(72) Inventor: Papaspyrou, Spyridion, Venaria Reale (IT)
(74) Representative: Garavelli, Paolo

(57) **Abstract**

A hybrid leaf spring (10) for vehicles is described, comprising a first leaf (1) made of metallic material, fixed to a second leaf (2) made of composite material.

## Description

The present invention refers to a hybrid leaf spring for vehicles, in particular a leaf spring that can be used in an intelligent system capable of collecting data relating to the behaviour of the spring during the working life of the vehicle.

More specifically, the invention refers to semi-elliptical and parabolic leaf springs and leaf spring brackets for industrial vehicles.

Known suspensions separate the suspended masses (body, interior, engine) of the vehicle from the un-sprung ones (the tyres) and include two elements, an elastic one, the spring, for example of the leaf spring type, which connects the chassis to the wheels and has the task of transforming the stresses coming from the ground into kinetic energy by loading the spring, and a dampener, the shock absorber which absorbs the kinetic energy loaded into the elastic components, limiting their oscillation time.

The suspension guarantees stability to the vehicle and comfort and safety for those in the passenger compartment.

Leaf springs are important components of the suspension system of industrial vehicles, such as trucks, and are subjected to multi-axial loads with variable amplitude.

Known leaf spring - shock absorber systems have the problem of having a high mass which influences the fuel consumption of the vehicle.

Furthermore, weight distribution in heavy-duty vehicles can undergo significant changes due to modifications made by vehicle bodybuilders. These modifications, including the addition of mechanical components and conversions for specialized applications, result in altered weight distribution that can compromise vehicle stability and driver safety.

Object of the present invention is developing hybrid leaf springs which, in addition to allowing a reduction in weight, integrate intelligent functions for real-time monitoring and adjustment.

Leveraging innovative materials, advanced manufacturing techniques and data analysis, the hybrid leaf spring of the invention helps improving vehicle sustainability and performance while increasing passenger safety.

Other objects of the invention are providing a hybrid leaf spring that has high structural integrity and includes a system of sensors that allow monitoring various parameters such as load distribution, stress levels and fatigue accumulation, enabling proactive maintenance, early fault detection and improved safety measures.

The above and other objects and advantages of the invention, as will appear from the following description, are achieved with a hybrid leaf spring such as that claimed in the independent claim. Preferred embodiments and non-trivial variants of the present invention form the subject of the dependent claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the attached claims.

The present invention will be better described by a preferred embodiment thereof, provided by way of example and not by way of limitation, with reference to the attached drawings, in which:

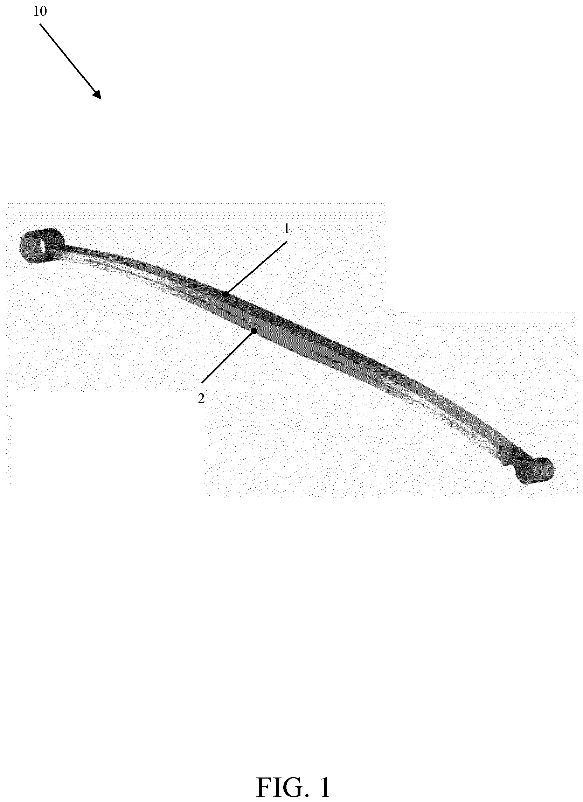

- Figure 1 shows a hybrid leaf spring according to the invention.

Referring to the Figure, the hybrid leaf spring 10 for vehicles according to the present invention comprises a first leaf or main leaf 1 made of metallic material, preferably steel (for example 51CrV4 steel), fixed to a second leaf 2 made of composite material, for example by means of adhesive placed between the surfaces of the two leaves 1, 2.

In a preferred embodiment of the hybrid leaf spring 10 for vehicles according to the invention, the second leaf 2 is made of a multilayer composite material comprising an alternation of layers of glass fibre (GF) sheets with carbon fibre (CF) sheets, in a 1 to 1 layer ratio, i.e. 50% layers made with glass fibre (GF) sheets and 50% layers made with carbon fibre (CF) sheets.

Preferably, the second leaf 2 made of composite material is fixed to the first metal leaf 1 by means of a co-curing technique, in which the resin of the composite material not yet polymerized itself acts as an adhesive. With this technique, the polymerization of the composite and the joint occurs simultaneously (co-cured).

Preferably, the joining surfaces between the first leaf 1 made of metallic material and the second leaf 2 made of composite material are machined in such a way as to increase their roughness to optimize the fixing between the leaves; in particular, the interface surface between the two sheets of the second leaf 2 in composite material are equipped with tips of different geometry, which, penetrating into corresponding cavities obtained on the interface surface of the first leaf 1 in metallic material, improve adhesion between the surfaces of the two different materials fixed by co-curing.

Preferably, the second leaf 2 made of composite material has a parabolic profile so as to obtain a variable thickness along its entire length in a decreasing manner starting from its centre to its ends.

For example, the thickness of the second leaf 2 at its centre is 16 mm and 13 mm at the ends.

In a preferred embodiment of the invention, the hybrid leaf spring 10 for vehicles comprises at least one sensor, preferably a plurality of sensors, fixed to the second leaf 2 made of composite material or inserted inside it to monitor the behaviour of the leaf spring 10 during loading and unloading of the vehicle on which it is mounted.

The sensor allows measuring the weight of the vehicle, measuring the linear effort and/or bending stresses in real time, preventing overloading of the vehicle and consequent breakage of the leaf spring.

Preferably, the sensor is positioned inside the composite material matrix during the moulding process of the leaf spring 10, or is welded onto the surface of the second leaf 2 during a second firing of the composite material.

The sensor must be able to withstand high temperatures (around 110 °C) and vacuum conditions to which it is subjected during the moulding of the second leaf 2 in composite material and is preferably positioned near areas of the leaf spring 10 which during the operation are subjected to high pressure loads.

Preferably, the sensor is attached to the second leaf 2 of the hybrid leaf spring 10 of the invention in one of the following ways:
- the sensor is inserted between two layers of pre-impregnated glass fibre,
- the sensor is immersed in epoxy resin which is polymerized either at room temperature or at 70°C for 3 hours, with or without application of vacuum,
- the sensor is fixed on the second leaf 2 of the hybrid leaf spring 10 made of composite material using a layer of pre-impregnated glass fibre, all of which is left to polymerise, for example for 50 minutes, at a temperature of 110°C.

The sensors vary the resistance value based on the applied force: under rest conditions, the resistance has a value tending towards infinity (∞) while by applying pressure the value lowers to a few tens of Ohm (Ω).

The sensor changes its resistive value slightly when flexed.

The positioning of the sensor inside the hybrid leaf spring is obtained through an experimental study based on machine learning analysis, and is essential to ensure accurate and reliable measurements. Factors such as deformation, vibration and temperature can be monitored using appropriate sensor technologies. The orientation of the sensor inside the second leaf 2 in composite material is also fundamental to acquire the desired data and guarantee the alignment of the leaf spring with the expected load conditions.

To ensure accurate measurements, the sensor output value must be calibrated specifically for the hybrid leaf spring and its intended load. Calibration procedures are established to correlate the sensor data with the actual mechanical behaviour of the hybrid leaf spring. This validation process ensures the reliability of the embedded sensor and its ability to provide meaningful data for analysis.

Preferably, the data sensed in real time by the sensor is collected and analysed by a monitoring system that allows continuously monitoring the performance of the hybrid leaf spring under operating conditions. By analysing the data collected by the sensors, any deviations from expected behaviour that highlight potential problems are identified, allowing to make informed decisions regarding maintenance and performance optimization.

By integrating sensors directly into hybrid leaf springs and establishing a robust monitoring system, real-time data can be leveraged to improve performance, durability and reliability of the suspension system.

Advantageously, the co-cured junction between the first leaf made of metallic material and the second leaf made of composite material of the hybrid leaf spring according to the invention allows obtaining a strong and reliable bond between the two leaves; factors such as joint design, surface preparation, adhesive selection and curing processes help identifying the optimal combination of manufacturing parameters to achieve a strong and reliable bond between the metallic material and composites.

An advantage of integrated sensors is to provide information on the mechanical behaviour of hybrid leaf springs, also allowing them to be optimized for design, identification of potential failure modes and ensure safe and efficient operation.

The hybrid leaf springs of the invention have the advantages of having low weight, high structural integrity improving the sustainability and performance of the vehicle and the safety of passengers.

## Claims

1. Hybrid leaf spring (10) for vehicles comprising a first leaf (1) made of a metallic material, fixed to a second leaf (2) made of a composite material.

2. Hybrid leaf spring (10) for vehicles according to claim 1, **characterized in that** the second leaf (2) is made of a multilayer composite material comprising an alternation of layers of glass fibre (GF) sheets with carbon fibre (CF) sheets.

3. Hybrid leaf spring (10) for vehicles according to claim 1 or 2, **characterized in that** the second leaf (2) made of composite material is fixed to the first leaf (1) made of metallic material by means of co-curing, in which the resin of the composite material not yet polymerized acts as an adhesive.

4. Hybrid leaf spring (10) for vehicles according to claim 3, **characterized in that** the interface surface between the two sheets of the second leaf (2) in composite material is equipped with tips of different geometry, which, penetrating into corresponding cavities obtained on the interface surface of the first leaf (1) in metallic material, improve the adhesion between the surfaces of the two different materials fixed by co-curing.

5. Hybrid leaf spring (10) for vehicles according to any of the previous claims, **characterized in that** the second leaf (2) made of composite material has a parabolic shaped profile so as to obtain a variable thickness along its entire length in decreasing way from its centre to its ends.

6. Hybrid leaf spring (10) for vehicles according to any of the previous claims, **characterized in that** it includes at least one sensor fixed to the second leaf (2) made of composite material or inserted inside it.

7. Hybrid leaf spring (10) for vehicles according to claim 6, **characterized in that** the sensor is positioned inside the composite material matrix during a moulding process of the leaf spring (10), or is welded onto the surface of the second leaf (2) during a second firing of the composite material.

8. Hybrid leaf spring (10) for vehicles according to claim 6 or 7, **characterized in that** the sensor is fixed to the second leaf (2) by inserting it between two layers of pre-impregnated glass fibre.

9. Hybrid leaf spring (10) for vehicles according to claim 6 or 7, **characterized in that** the sensor is fixed to the second leaf (2) by immersing it in epoxy resin which is polymerized.

10. Hybrid leaf spring (10) for vehicles according to claim 6 or 7, **characterized in that** the sensor is fixed on the second leaf (2) using a layer of pre-impregnated glass fibre.
